# EUROPEAN PATENT SPECIFICATION

(11) **EP 3 104 477 B1**
(45) Date of publication and mention of the grant of the patent: **29.05.2019**
(21) Application number: 15397528.9
(22) Date of filing: 09.06.2015
(51) Int. Cl.: H02G 3/08, F21V 25/12

(54) **A LID FOR A CASING**
DECKEL FÜR EIN GEHÄUSE
COUVERCLE DESTINÉ À UN BOÎTIER

(43) Date of publication of application: 14.12.2016
(73) Proprietor: Atexor Oy, 02630 Espoo (FI)
(72) Inventor: Vesa, Mäkelä, 62100 Lapua (FI)
(74) Representative: Berggren Oy, Tampere

(56) References cited:
- CN-U- 203 489 190
- US-B1- 6 353 184

## Description

### Field of the Invention

The present invention relates to a lid for a casing and a device comprising a lid and a casing.

### Background of the Invention

Many electronic devices are provided with cables which penetrate through a casing of the electronic device, for example through a hole which has been formed to the casing. Cables may comprise, for example, a power cord for supplying electric power to the electronic device and/or wires for receiving signals and/or transmitting signals, etc.

Especially with portable electronic devices cables penetrating through a hole in the casing may be exposed to wear, bending and other forces which may weaken the cables at the location in which the cables enter the casing. Therefore, it may be required to replace a broken cable with a new one. This typically has to be made by opening the casing before the broken cable can be pulled out and a new cable can be pushed through the hole of the casing. There may be even dozens of screws or other fastening elements which keep parts of the casing attached with each other. Hence, opening such casing may require that each fastening element is removed before the parts of the casing can be detached. Correspondingly, closing the casing after the cable has been replaced may also require that each fastening element is fixed back to the correct place. This may take quite a lot of time and it may happen that some of the fastening elements are so tight that it may be difficult to remove them. Furthermore, especially devices which are approved to be used in hazardous environments (e.g. so called explosion proof devices, a.k.a. flame proof devices, or intrinsically safe devices) have very strict safety requirements. Opening and closing the casing may weaken the casing or the sealing of the casing wherein the device may no longer fulfil the safety requirements. It may also be possible that the safety of the device need to be reapproved each time when the casing has been opened.

Yet another disadvantage with the above described casings of electronic devices is that the size and/or form of the casing may be such that it is not easy to make the through-holes to the casings. Therefore, the location of the through-holes may not be optimum and/or the quality may not be at a desired level and may weaken the casing.

CN203489190 U discloses a lid for a casing of a device suitable for using in environments in which a risk of explosion may exist, as defined in the preamble of claim 1.

### Summary of the Invention

One aim of the present invention is to provide a lid for a casing which may improve the utilization of casings for electronic devices and may make it easier to replace broken parts of the electronic devices.

According to one aspect there is provided a lid for a casing of a device as defined by claim 1.

In accordance with an embodiment the surface comprises a through-hole for one or more cables.

In accordance with an embodiment the surface comprises a collar at least partly around the through-hole for preventing rotational movement of a feed through of the cable.

In accordance with an embodiment the surface comprises two or more collars at different locations, each collar being at least partly around an area of the surface providing a selectable location for a through-hole.

In accordance with an embodiment the two or more collars are adapted to prevent rotational movement of a feed through of the cable.

In accordance with an embodiment at least one side wall comprises one or more bulges adapted to be fitted to a collar on a surface of the casing.

In accordance with an embodiment the lid comprises one or more holes at the circumference of the lid for receiving fixing elements adapted to be used to attach the lid to the casing.

In accordance with an embodiment the lid comprises a threaded part opposite to the surface and adapted to be used as a fixing element to attach the lid to the casing.

In accordance with an embodiment at least one side wall comprises one or more bulges adapted to be fitted to a collar on a surface of the casing.

According to another aspect there is provided a device suitable for using in environments in which a risk of explosion may exist, the device comprising:
- a casing;
- a lid; and
- means for attaching the lid with the casing.

### Description of the Drawings

In the following, the invention will be described in more detail with reference to the appended drawings, in which
- Figure 1: is a top view of an example of a casing of a device comprising a lid in accordance with an embodiment;
- Figure 2: is a cross sectional view of a part of the casing of Figure 1;
- Figures 3a to 3c: illustrate as top views examples of lids in accordance with an embodiment;
- Figure 4: illustrates an example of another casing in which the lid can be used according to an example embodiment;
- Figure 5: is a cross sectional view of an example casing having the lid installed and operating as an interface for a cable, in accordance with an embodiment;
- Figure 6a: is a perspective view of a casing of a device according to another example embodiment;
- Figure 6b: is a perspective view of an example of a lid for the casing of Figure 6a;
- Figure 7: is a perspective view of an illuminator in which the lid may be implemented in accordance with an embodiment;
- Figure 8: is a perspective view of an example of a lid comprising two different materials; and
- Figures 9a to 9d: illustrate as cross sectional views some other examples of the lid.

### Detailed Description of the Invention

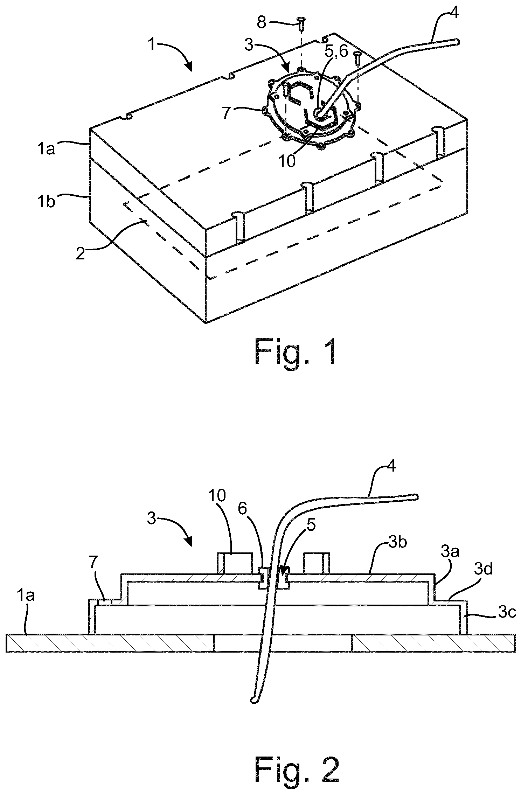

In the following some example embodiments of the present invention will be explained in more detail. Figure 1 is a top view of an example of a casing 1 of a device 2 comprising a lid 3 in accordance with an embodiment. In this example, the casing 1 comprises two parts: a first part 1a and a second part 1b, which are removably attachable with each other with some fixing devices, such as screws. The attachment of the first part 1a and the second part 1b may be sealed by a gasket (not shown) or by using another sealing method.

To understand the present invention it is not necessary to describe more details of the device than those which are related to the lid 3.

In the example of Figure 1 the lid 3 is attached with the first part 1a of the casing 1 so that cables 4 may be led via the lid 3. For that purpose the lid 3 may comprise one or more inlets 5, such as holes. An inlet sleeve 6 may also be attached with the inlet 5 so that the cable 4 is led via the inlet sleeve 6. Hence, the inlet sleeve 6, which is preferably made of a resilient material, may seal the inlet 5 and also provide some protection for the cable 4 against wearing.

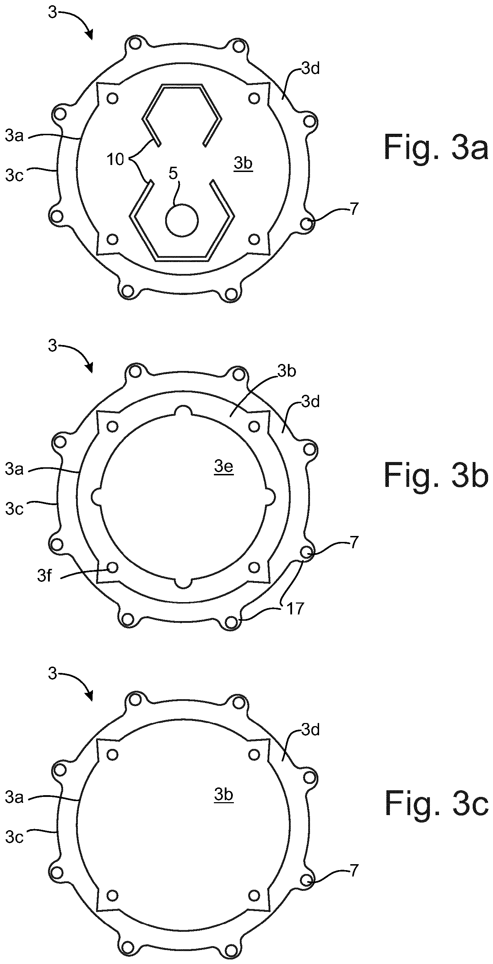

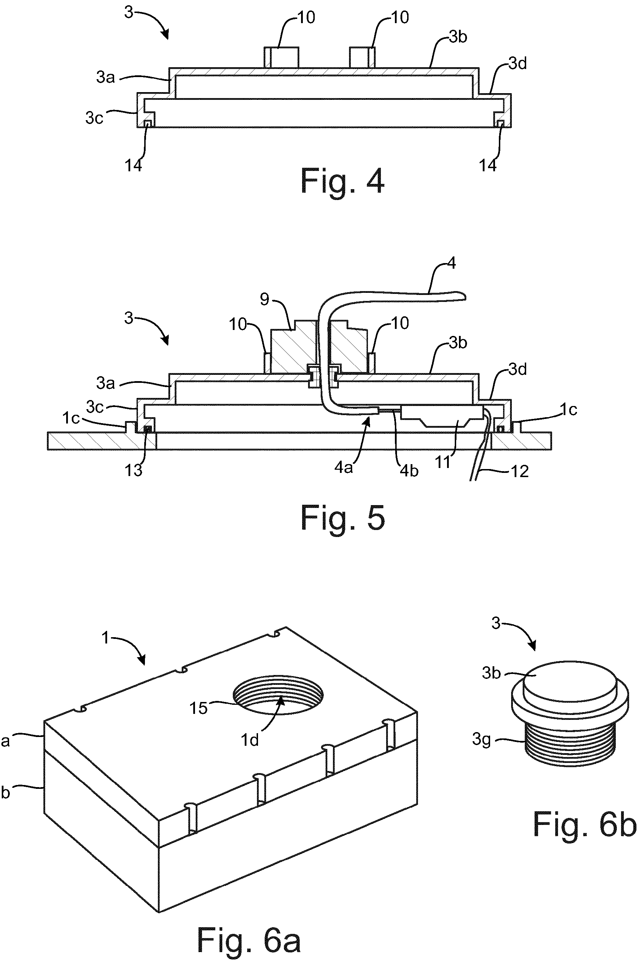

Figures 3a to 3c illustrate as a top view examples of lids 3 in accordance with an embodiment and Figure 4 illustrates a cross sectional view of a lid 3 in accordance with an embodiment. The lid 3 of Figures 3a and 4 comprises a first side wall 3a for stiffening the lid 3, and a planar surface 3b almost perpendicular with the first side wall 3a. In other words, the first side wall 3a surrounds the planar surface 3b. The lid 3 of Figure 3a further comprises a second side wall 3c, which has a larger diameter than the first side wall 3a. The first side wall 3a and the second side wall 3c are attached with each other by a flange 3d, wherein the first side wall 3a, the second side wall 3c and the flange 3d form a kind of step-like structure, as can be seen from the cross sectional view of Figure 4. The flange 3d may comprise holes 7 or other formations which may be used as vias for fixing elements 8, or they may be made to the lid 3 when the lid 3 will be attached with the casing 1. The fixing elements 8, which may be screws or other appropriate objects, can then be used to fix the lid 3 to the casing 1. The lid 3 may further comprise a gasket 13 to make the connection between the lid 3 and the casing 1 more leak-proof. The lid 3 may comprise a groove 14 for attaching the gasket 13 with the lid 3 as is illustrated in Figure 4.

It should be noted here that due to practical reasons the planar surface 3b may not be exactly perpendicular with the first side wall 3a especially when a mould is used in manufacturing of the lid 3, because it may not be possible to remove the lid 3 from the mould if the planar surface 3b were perpendicular with the first side wall 3a.

The holes 7 may be arranged near a circumference of the lid 3. In accordance with an embodiment, the circumference of the second wall 3c comprises a kind of bulges 17 or other formations through which the holes 7 may have been formed. Figures 3a-3c illustrate an example of such bulges. Such bulges 17 may also operate as a means for preventing the lid 3 from rotating. However, it should be noted that the bulges 17 may not be needed wherein it may be sufficient to only use screws or other kinds of fixing elements to prevent the lid 3 from rotating.

In accordance with the example of Figure 3a the flange 3d and the second side wall 3c have been slightly extended at the locations of the holes 7, but in some other embodiments those extensions are not needed. The extensions may improve the attachment of the lid 3 to the casing 1 at least against forces which may tend to rotate the lid 3 with reference to the casing 1. To achieve this, the first part 1a of the casing comprises one or more collars 1c which have substantially similar inner circumference than the outer circumference of the second side wall 3c of the lid so that the collar 1c can receive the second side wall 3c of the lid 3, as is illustrated in Figure 5. The extensions may have the form which, for example, resembles a half circle as is illustrated in Figure 3a, a triangle, a rectangle, etc.

A cross sectional view of the inlet 5 is depicted in Figure 5, in accordance with an embodiment. In this example the cable 4 is provided with a feed through 9. The outer circumference of the feed through 9 is substantially corresponding with the inner circumference of the collar 10 of the lid 3. Hence, the feed through 9 can be positioned in the space defined by the inner circumference of the collar 10. The collar 10 prevents the feed through rotating and hence may improve the life time of the cable 4. One end 4a of the wires 4b of the cable are coupled to first set of terminals of a connector 11. The connector 11 is fixed to the lid 3 so that when the lid 3 is in place the connector 11 is inside the casing 1. The connector 11 also has a second set of terminals which may be used to forward the wiring from the connector 11 to the device in the casing 1. In other words, the electrical coupling from the wires 4b of the cable to the corresponding wires 12 of the device can be made by the connector 11. Hence, if the cable 4 were needed to be replaced for some reason, the wires 4b of the cable 4 can be released from the first set of terminals of the connector 11 and pulled separate from the lid 3. A new cable can then be inserted via the inlet 5 and wires of the cable can be coupled to the connector 11. On the other hand, if the lid 3 were needed to be taken away from the casing 1 further than the free-standing portion of the cables allows, the wires 12 from the device can be released from the second set of terminals of the connector 11 after which the lid 3 can be taken away.

The lid 3 of Figure 3a comprises two collars 10 thus limiting two areas in which a cable can be inserted. One of the collars 10 has a smaller circumference than the other one so the cable insertion area can be selected on the basis of the feed through 9 of the cable. On the other hand, the feed through 9 for the cable may be selectable wherein the feed through 9 may be selected to correspond with the collar 10 of the lid 3.

Although the lid 3 may comprise one or more collars 10 or corresponding elements defining appropriate insertion locations for the cable 4, the lid 3 may not readily comprise the hole 5 for the cable 4 but the hole 5 may be made after selecting the insertion location. The hole 5 may be made by drilling, punching, or using another appropriate machinering method. In accordance with an embodiment, the hole 5 has already been made during manufacturing of the lid 3.

Figure 3b illustrates another example of the lid 3. In this example the surface 3b comprises an opening 3e for receiving a connector, a socket for a plug, a flanged inlet or another device. The connector may be fixed to the surface 3b of the lid by screws or by other fixation members. The surface 3b may comprise inserts, notches, or holes 3f which may not be through-holes, wherein the screws may be screwed into them. The opening 3e may then be used to lead wires from the connector into the casing 1.

Figure 3c illustrates yet another example of the lid 3. In this example the surface 3b does not have any openings, vias or collars but is a planar structure. Such a lid may be used as a closure element for the casing 1 for example in situations in which the casing 1 has two or more selectable locations for the lid 3. This kind of lid 3 is also applicable in situations in which possible vias or openings are intended to be formed when it is known with which kind of device 2 and casing 1 the lid 3 will be used. Hence, the lid 3 gives more freedom of choice for the use of the lid 3.

In the above examples the lid 3 comprises two side walls 3a, 3c, but the invention is not limited to such lids only. For example, only one side wall 3a may be sufficient, or there may be more than two side walls 3a, 3c. The circumference of the side walls 3a, 3c need not be circular but may also have different forms, such as a rectangle, an ellipse, a polygon, etc.

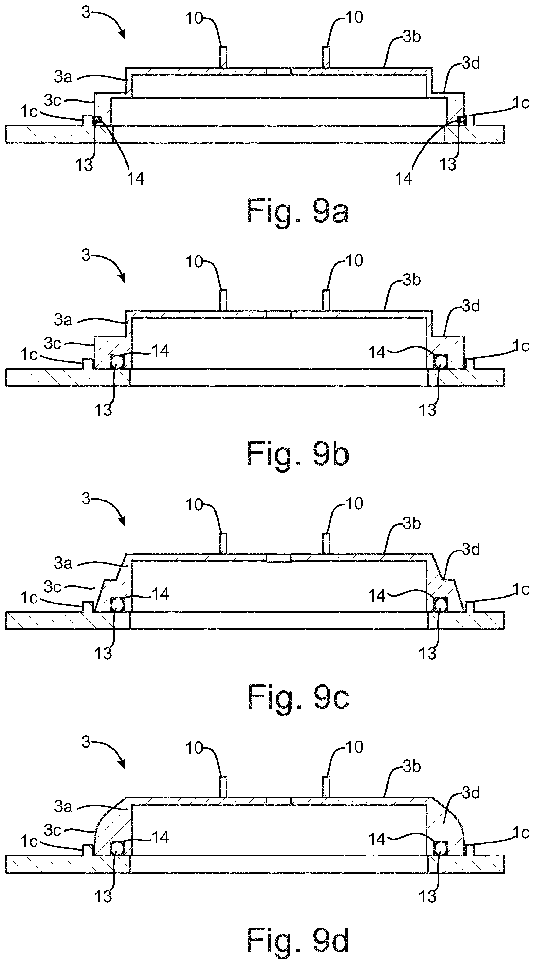

Figures 9a to 9d illustrate some other examples of the lid 3 as cross sectional views. In the example of Figure 9a the groove 14 for the gasket is implemented in the second side wall 3c, wherein the gasket 13 is adapted to be located in the groove so that the gasket 13 will seal the space between the second side wall 3c and the collar 1c.

In the example of Figure 9b the lid 3 has no step in the inner circumference of the first side wall 3a but it is substantially straight from top to bottom. Hence, the thickness of the second side wall 3c may be greater than in the embodiment of Figure 2, for example. The groove 14 for the gasket 13 may be implemented in the bottom surface of the second side wall 3c, as is illustrated in Figure 9b, or in the surface of the second side wall similar to the example of Figure 9a.

In the example of Figure 9c the side walls 3a, 3c are at an angle between 0° and 90° with respect to the surface 3b. In other words, the side walls 3a, 3c are sloped, which may improve the manufacturing process of the lid 3 especially when the lid 3 is formed by injection moulding. Namely, the lid 3 may be easier to release from a mould when the side walls 3a, 3c are not perpendicular to the surface 3b of the lid 3.

In the example of Figure 9d the lid 3 has only one side wall 3a, which has a curved outer surface.

Furthermore, the fixing of the lid 3 to the casing 1 need not be based on screws or other corresponding fixing devices. In accordance with an embodiment, the lid 3 may be cylindrical in such a way that a cross section of one side wall is a circle and this side wall has threading 3g at the outer circumference, as is illustrated in Figure 6b. Hence, the casing 1 may have an opening 15 having corresponding threading 1d in the inner circumference of the opening, as is illustrated in Figure 6a. Attachment of the lid 3 to the casing 1 may then be performed by rotating the lid to the threading of the opening.

In accordance with another embodiment, the casing 1 may have a cylindrical opening 15, for example a circular, elliptical, rectangular, or polygonal opening. The lid 3 may then have similar kind of side wall (or side walls) which fit into the opening of the casing, wherein the lid 3 can be put into the opening. In other words, the lid 3 is like a piston and the opening of the casing 1 is like a cylinder in which the piston firmly fits. The attachment may be secured by screw or another fixing element. If the attachment needs to be tight, a gasket may be installed on the outer circumference of the side wall of the lid 3 before putting the lid 3 to the opening of the casing 1.

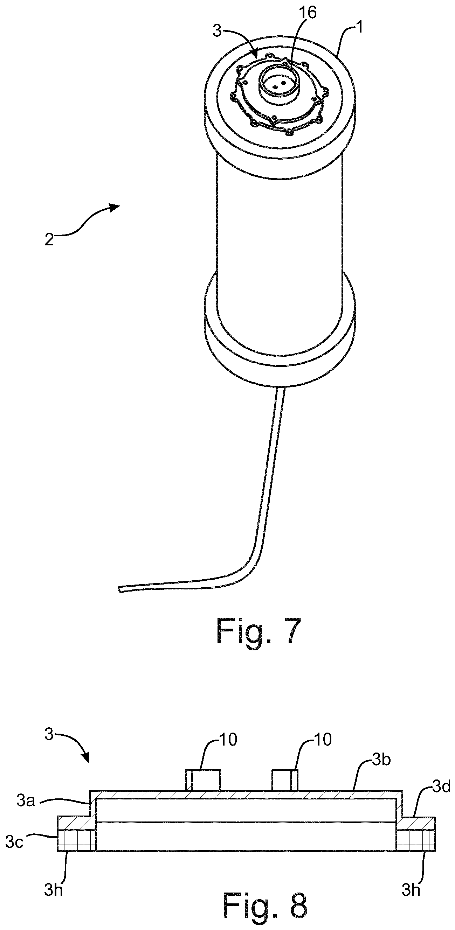

In accordance with an embodiment, the lid 3 may be used to add or change some features of the device 2. For example, a socket 16 may be installed to an illuminator, as is depicted in Figure 7. This may be performed e.g. so that the illuminator is originally provided with a lid 3 in which the surface does not have any openings (e.g. the example of Figure 3c) and when the socket will be inserted, the original lid 3 is removed and replaced with a lid 3 having appropriate opening for the socket (e.g. the example of Figure 3b), and the socket installed in the opening.

The socket 16 may be attached to the bottom side of the lid 3 e.g. by screws or by some other fixation members wherein the bottom side of the lid 3 may comprise inserts, notches, or holes (not shown) which may not be through-holes, wherein the screws or other fixation members may be screwed into them.

In accordance with an embodiment the socket 16 may be attached with the lid 3 without using separate fixation members but the lid 3 may comprise a kind of claws located in the vicinity of the opening for the socket, wherein the claws may lock the socket 16 in connection with the lid 3 when the socket 16 is pressed against the bottom surface of the lid 3.

In accordance with another embodiment, the lid 3 may be used to strengthen the casing 1 of the device 2. For example, the lid 3 may be attached with the casing 1 at such location in which the lid 3 provides additional protection against bashes on the casing 1 and/or the lid 3 may be used to keep two or more parts of the casing together.

The lid 3 may also enhance the production efficiency of the device 2 because similar casing 1 may be used for different versions of the device 2. Thus, many devices 2 may be assembled into the casing 1 to form semi-finished products. They may be stored into a warehouse and finalised by selecting an appropriate lid 3 so that the semi-finished product gets the properties according to the ordered version of the device 2. If the lid 3 according to the present invention were not used, different kinds of semi-finished products should be made and stored into a warehouse.

In accordance with an embodiment, the lid 3 may further comprise receptacles, holes or other formations on the backside, i.e. in that side which will be located inside the casing 1 when the lid 3 is installed to the casing 1. These formations may be adapted to be used as fixing points for connectors or other objects under the lid 3 and/or for fixing the socket for a plug or another component to the lid 3 from the backside.

As can be seen from the cross section of the lid 3 (e.g. Figure 2), the lid 3 may also be used to increase the inner volume of the casing 1 because of the one or more side walls 3a, 3c which raise surface 3b of the lid above the surface of the casing 1.

Yet another advantage of the usage of the separate lid 3 with the casing 1 may be that making holes or other openings to the casing 1 may be much more difficult than making them to the lid 3.

The material of the lid 3 may depend on the requirements regarding the device 2. For example, the device 2 may be intended to be used in hazardous environments, especially in environments where there may be a risk for explosions, wherein the lid 3 may need to be able to dissipate a possible electric charge from the lid. In other words, the material need not be electrically conductive but has such a level of resistance which is sufficient to discharge at least part of electric energy from the lid 3. Further, some environmental conditions may require that the material needs to sustain chemical substances, salt, corrosion, etc. The material should also be mechanically durable and be able to withstand mechanical forces at some level. Examples of suitable materials are some forms of plastics. Operating temperature range of the device may also be quite large, wherein the material should have at least equally large temperature range for use. As an example, the temperature range may be from -20°C ... +50°C, or even larger, e.g. from -35°C ... +70°C. In direct sunshine the temperature may rise even above that especially if the colour of the lid 3 (and the casing) is dark.

Some materials which may be suitable for the lid 3 are known as elastomers, which are polymers having elastic properties like rubber.

In accordance with an embodiment, the material of the lid 3 is such which, on one hand, is suitable for casing material and, on the other hand, is capable for sealing the junction between the casing 1 and the lid 3. Hence, separate gaskets 13 may not be needed for the sealing the junction between the casing 1 and the lid 3. The above mentioned elastomer is an example of such material but also some other corresponding materials may exist.

In accordance with an embodiment, the lid 3 may comprise more than two materials. For example, the majority of the material of the lid 3 may be polymer which need not be elastic, and those parts of the lid 3 which are adapted to face a surface of a casing of a device may have more elasticity. In other words, the bottom section 3h of the second side wall 3c (or the first side wall 3a, if the lid 3 only has one side wall), is made of elastomer. An example of this is illustrated in Figure 8. In this case the gasket 13 and also the groove 14 for the gasket 13 may not be needed.

The lid 3 may be manufactured with many different kinds of methods. For example, the lid 3 may be formed by injection moulding, wherein liquidised polymer or other material is injected into a mould. In accordance with an embodiment, the mould can comprise two parts, wherein one part may be the same for each lid 3 to be produced and the other part may vary depending on the form of the surface 3b of the lid 3 to be produced. This has, among other things, the advantage that production costs of the moulds are cheaper compared to production methods in which each different kind of product required its own mould. By the present invention, only the other half of the mould need to be produced for each different kind of lid 3.

Some examples of devices 2 with which the lid 3 may be utilized are illuminators, such as torches or other portable lamps, and transformers, but the invention is not only limited to such devices.

The present invention is not limited to the above described embodiments but can be modified within the scope of the appended claims.

## Claims

1. A lid (3) for a casing (1) of a device (2) suitable for using in environments in which a risk of explosion may exist, the lid (3) comprising:
- means (7) for attaching the lid (3) with the casing (1);
- at least one side wall (3a, 3c) for stiffening the lid (3); and
- a surface (3b) having overall direction which is different than parallel to the at least one side wall (3a, 3c);
**characterised in that** the lid (3) further comprises:
- a connector (11) fixed to the lid (3) so that the connector (11) is adapted to be located inside the casing (1) when the lid (3) is attached with the casing (1).

2. The lid (3) according to claim 1, **characterised in that** the surface (3b) comprises a through-hole (5) for at least one of the following:
one or more cables (4) of the device (2);
one or more sockets (16) for a plug;
one or more flanged inlets.

3. The lid (3) according to claim 1 or 2, **characterised in that** the surface (3b) comprises at least one collar (10) at least partly around the through-hole for preventing rotational movement of a feed through (9) of the cable (4).

4. The lid (3) according to claim 3, **characterised in that** the surface (3b) comprises two or more collars (10) at different locations, each collar (10) being at least partly around an area of the surface providing a selectable location for a through-hole.

5. The lid (3) according to any of the claims 1 to 4, **characterised in that** at least one side wall comprises one or more bulges (17) adapted to be fitted to a collar on a surface of the casing.

6. The lid (3) according to any of the claims 1 to 5, **characterised in that** the lid (3) comprises one or more holes (7) at the circumference of the lid (3) for receiving fixing elements (8) adapted to be used to attach the lid (3) to the casing (1).

7. The lid (3) according to any of the claims 1 to 6, **characterised in that** the lid (3) comprises a threaded part (3g) opposite to the surface (3b) and adapted to be used as a fixing element to attach the lid (3) to the casing (1).

8. The lid (3) according to any of the claims 1 to 7, **characterised in that** the lid (3) comprises a first side wall (3a) and a second side wall (3c) attached with each other by a flange (3d) in between.

9. The lid (3) according to any of the claims 1 to 8, **characterised in that** the lid (3) comprises a groove (14) for a gasket (13).

10. The lid (3) according to any of the claims 1 to 9, **characterised in that** the material of the lid (3) is suitable for casing material and is capable for sealing a junction between the casing (1) and the lid (3).

11. The lid (3) according to any of the claims 1 to 9, **characterised in that** the lid (3) comprises a first type of material (3h) and a second type of material, wherein at least the first type of material (3h) is elastomer.

12. The lid (3) according to claim 11, **characterised in that** the first type of material is adapted to be located against a surface of the casing (1) to improve sealing between the lid (3) and the casing (1).

13. A device (2) suitable for using in environments in which a risk of explosion may exist, the device (2) comprising:
- a casing (1); and
- a lid (3) according to any of the claims 1 to 12;
wherein the device (2) further comprises means (7) for attaching the lid (3) with the casing (1).

14. The device (3) according to claim 13, **characterised in that** the surface (3b) of the lid (3) is without opening, wherein at least one property of the device (2) is adapted to be changed by replacing the lid (3) with another lid having an opening for implementing the change of the at least one property.

15. The device (3) according to claim 13 or 14, **characterised in that** the device (2) is one of the following:
- an illuminator;
- a transformer.

## Patentansprüche

1. Ein Deckel (3) für ein Gehäuse (1) einer Vorrichtung (2), geeignet zur Verwendung in Umgebungen, in denen eine Explosionsgefahr bestehen kann, wobei der Deckel (3) Folgendes aufweist:
- Mittel (7) zum Befestigen des Deckels (3) an dem Gehäuse (1);
- mindestens eine Seitenwand (3a, 3c) zum Versteifen des Deckels (3); und
- eine Oberfläche (3b) mit einer Gesamtrichtung, die anders als parallel zu der mindestens einen Seitenwand (3a, 3c) ist;
**dadurch gekennzeichnet, dass** der Deckel (3) ferner aufweist:
- ein Verbindungsstück (11), das am Deckel (3) befestigt ist, so dass das Verbindungsstück (11) ausgebildet ist, innerhalb des Gehäuses (1) angeordnet zu werden, wenn der Deckel (3) mit dem Gehäuse (1) verbunden ist.

2. Deckel (3) nach Anspruch 1, **dadurch gekennzeichnet, dass** die Oberfläche (3b) ein Durchgangsloch (5) für mindestens eines der folgenden Bauteile umfasst:
∘ ein oder mehrere Kabel (4) der Vorrichtung (2);
∘ einen oder mehrere Sockel (16) für einen Stecker;
∘ einen oder mehrere mit Flansch versehene Einlässe.

3. Deckel (3) nach Anspruch 1 oder 2, **dadurch gekennzeichnet, dass** die Oberfläche (3b) mindestens einen Bund (10) zumindest teilweise um das Durchgangsloch herum aufweist, um eine Drehbewegung einer Durchführung (9) des Kabels (4) zu verhindern.

4. Deckel (3) nach Anspruch 3, **dadurch gekennzeichnet, dass** die Oberfläche (3b) zwei oder mehr Bunde (10) an verschiedenen Stellen aufweist, wobei sich jeder Bund (10) zumindest teilweise um einen Bereich der Oberfläche herum befindet, welcher eine wählbare Position für ein Durchgangsloch bereitstellt.

5. Deckel (3) nach einem der Ansprüche 1 bis 4, **dadurch gekennzeichnet, dass** mindestens eine Seitenwand eine oder mehrere Wölbungen (17) aufweist, die ausgebildet sind, um an einem Bund an einer Oberfläche des Gehäuses angebracht zu werden.

6. Deckel (3) nach einem der Ansprüche 1 bis 5, **dadurch gekennzeichnet, dass** der Deckel (3) ein oder mehrere Löcher (7) am Umfang des Deckels (3) zur Aufnahme von Befestigungselementen (8) aufweist, die ausgebildet sind, um zur Befestigung des Deckels (3) am Gehäuse (1) verwendet zu werden.

7. Deckel (3) nach einem der Ansprüche 1 bis 6, **dadurch gekennzeichnet, dass** der Deckel (3) ein der Oberfläche (3b) entgegengesetztes Gewindeteil (3g) aufweist, das zur Verwendung als Befestigungselement zur Befestigung des Deckels (3) am Gehäuse (1) ausgebildet ist.

8. Deckel (3) nach einem der Ansprüche 1 bis 7, **dadurch gekennzeichnet, dass** der Deckel (3) eine erste Seitenwand (3a) und eine zweite Seitenwand (3c) aufweist, die aneinander durch einen Flansch (3d) dazwischen befestigt sind.

9. Deckel (3) nach einem der Ansprüche 1 bis 8, **dadurch gekennzeichnet, dass** der Deckel (3) eine Nut (14) für eine Dichtung (13) aufweist.

10. Deckel (3) nach einem der Ansprüche 1 bis 9, **dadurch gekennzeichnet, dass** sich das Material des Deckels (3) als Gehäusematerial eignet und in der Lage ist, eine Verbindung zwischen dem Gehäuse (1) und dem Deckel (3) abzudichten.

11. Deckel (3) nach einem der Ansprüche 1 bis 9, **dadurch gekennzeichnet, dass** der Deckel (3) einen ersten Materialtyp (3h) und einen zweiten Materialtyp aufweist, wobei mindestens der erste Materialtyp (3h) ein Elastomer ist.

12. Deckel (3) nach Anspruch 11, **dadurch gekennzeichnet, dass** der erste Materialtyp so ausgebildet ist, dass er an einer Oberfläche des Gehäuses (1) anliegt, um die Abdichtung zwischen dem Deckel (3) und dem Gehäuse (1) zu verbessern.

13. Eine Vorrichtung (2), die zur Verwendung in Umgebungen geeignet ist, in denen ein Explosionsrisiko bestehen kann, wobei die Vorrichtung (2) umfasst:
- ein Gehäuse (1); und
- einen Deckel (3) nach einem der Ansprüche 1 bis 12;
wobei die Vorrichtung (2) ferner Mittel (7) zum Befestigen des Deckels (3) am Gehäuse (1) aufweist.

14. Vorrichtung (3) nach Anspruch 13, **dadurch gekennzeichnet, dass** die Oberfläche (3b) des Deckels (3) ohne Öffnung ist, wobei mindestens eine Eigenschaft der Vorrichtung (2) ausgebildet ist, um durch Ersetzen des Deckels (3) durch einen anderen Deckel mit einer Öffnung zur Durchführung der Änderung der mindestens einen Eigenschaft verändert zu werden.

15. Vorrichtung (3) nach Anspruch 13 oder 14, **dadurch gekennzeichnet, dass** die Vorrichtung (2) eines der folgenden ist:
- eine Beleuchtungsvorrichtung;
- ein Transformator.

## Revendications

1. Couvercle (3) pour un boîtier (1) d'un dispositif (2) convenant pour une utilisation dans des environnements dans lesquels un risque d'explosion peut exister, le couvercle (3) comprenant :
- un moyen (7) pour lier le couvercle (3) avec le boîtier (1);
- au moins une paroi latérale (3a, 3c) pour raidir le couvercle (3) ; et
- une surface (3b) qui présente une direction générale qui est autre que parallèle à l'au moins une paroi latérale (3a, 3c) ;
**caractérisé en ce que** le couvercle (3) comprend en outre :
- un connecteur (11) fixé au couvercle (3) de telle sorte que le connecteur (11) soit adapté pour être localisé à l'intérieur du boîtier (1) lorsque le couvercle (3) est lié avec le boîtier (1).

2. Couvercle (3) selon la revendication 1, **caractérisé en ce que** la surface (3b) comprend un trou traversant (5) pour au moins l'un des jeux d'éléments constitutifs qui suivent :
un ou plusieurs câble(s) (4) du dispositif (2) ;
un ou plusieurs socle(s) formant douille (16) pour une prise ;
une ou plusieurs entrée(s) à bride.

3. Couvercle (3) selon la revendication 1 ou 2, **caractérisé en ce que** la surface (3b) comprend au moins un collier (10) au moins partiellement autour du trou traversant pour empêcher un mouvement de rotation d'un trou d'interconnexion (9) du câble (4).

4. Couvercle (3) selon la revendication 3, **caractérisé en ce que** la surface (3b) comprend deux colliers (10) ou plus au niveau de localisations différentes, chaque collier (10) étant au moins partiellement autour d'une zone de la surface qui constitue une localisation pouvant être sélectionnée pour un trou traversant.

5. Couvercle (3) selon l'une quelconque des revendications 1 à 4, **caractérisé en ce qu'**au moins une paroi latérale comprend un ou plusieurs renflement(s) (17) qui est/sont adapté(s) pour être emboîté(s) sur un collier sur une surface du boîtier.

6. Couvercle (3) selon l'une quelconque des revendications 1 à 5, **caractérisé en ce que** le couvercle (3) comprend un ou plusieurs trou(s) (7) au niveau de la circonférence du couvercle (3) pour recevoir des éléments de fixation (8) adaptés pour être utilisés pour lier le couvercle (3) au boîtier (1).

7. Couvercle (3) selon l'une quelconque des revendications 1 à 6, **caractérisé en ce que** le couvercle (3) comprend une partie filetée (3g) opposée à la surface (3b) et adaptée pour être utilisée en tant qu'élément de fixation pour lier le couvercle (3) au boîtier (1).

8. Couvercle (3) selon l'une quelconque des revendications 1 à 7, **caractérisé en ce que** le couvercle (3) comprend une première paroi latérale (3a) et une seconde paroi latérale (3c) qui sont liées l'une à l'autre par une bride (3d) entre elles.

9. Couvercle (3) selon l'une quelconque des revendications 1 à 8, **caractérisé en ce que** le couvercle (3) comprend une rainure (14) pour un joint d'étanchéité (13).

10. Couvercle (3) selon l'une quelconque des revendications 1 à 9, **caractérisé en ce que** le matériau du couvercle (3) convient pour un matériau de boîtier et permet d'assurer l'étanchéité d'une jonction entre le boîtier (1) et le couvercle (3).

11. Couvercle (3) selon l'une quelconque des revendications 1 à 9, **caractérisé en ce que** le couvercle (3) comprend un premier type de matériau (3h) et un second type de matériau, dans lequel au moins le premier type de matériau (3h) est de l'élastomère.

12. Couvercle (3) selon la revendication 11, **caractérisé en ce que** le premier type de matériau est adapté pour être localisé contre une surface du boîtier (1) pour améliorer l'étanchéité entre le couvercle (3) et le boîtier (1).

13. Dispositif (2) convenant pour une utilisation dans des environnements dans lesquels un risque d'explosion peut exister, le dispositif (2) comprenant :
- un boîtier (1) ; et
- un couvercle (3) selon l'une quelconque des revendications 1 à 12 ; dans lequel :
le dispositif (2) comprend en outre un moyen (7) pour lier le couvercle (3) avec le boîtier (1).

14. Dispositif (3) selon la revendication 13, **caractérisé en ce que** la surface (3b) du couvercle (3) est sans ouverture, dans lequel au moins une propriété du dispositif (2) est adaptée pour être modifiée en remplaçant le couvercle (3) par un autre couvercle qui comporte une ouverture pour mettre en oeuvre la modification de l'au moins une propriété.

15. Dispositif (3) selon la revendication 13 ou 14, **caractérisé en ce que** le dispositif (2) est l'un des dispositifs qui suivent :
- un dispositif d'éclairage ;
- un transformateur.
